# FASCICULE DE BREVET EUROPEEN

(11) **EP 3 204 663 B1**
(45) Date de publication et mention de la délivrance du brevet: **31.10.2018**
(21) Numéro de dépôt: 15771202.7
(22) Date de dépôt: 10.09.2015
(51) Int. Cl.: F16F 9/38, B60G 13/00, F16F 9/54

(54) **SYSTÈME DE PROTECTION POUR AMORTISSEUR HYDRAULIQUE COMPORTANT UN SOUFFLET ET DES PERÇAGES DE VENTILATION**
SCHUTZSYSTEM FÜR HYDRAULISCHEN STOSSDÄMPFER MIT BALG UND ENTLÜFTUNGSBOHRUNGEN
PROTECTION SYSTEM FOR HYDRAULIC SHOCK ABSORBER COMPRISING A GAITER AND VENTILATION DRILLINGS

(30) Priorité: 09.10.2014 FR 1459693
(43) Date de publication de la demande: 16.08.2017
(73) Titulaire: PSA Automobiles SA, 78300 Poissy (FR)
(72) Inventeur: MULLER, Jerome, F-25600 Nommay (FR); LE COSQUER, Yannick, F-25350 Mandeure (FR); JEANNEAU, Yann, F-35850 Geveze (FR); SIGOGNAULT, André-Louis, F-35830 Betton (FR)
(74) Mandataire: Rosenberg, Muriel Sylvie
(86) Numéro de dépôt international: PCT/FR2015/052419
(87) Numéro de publication internationale: WO 2016/055707

(56) Documents cités:
- CN-U- 201 843 929
- DE-A1- 10 041 927
- DE-A1-102013 211 644
- DE-B3-102006 001 305

## Description

La présente invention concerne un système de protection pour un amortisseur de suspension de véhicule automobile, ainsi qu'un véhicule automobile comportant de tels systèmes de protection.

Les véhicules automobiles comportent généralement des suspensions reliant des bras de suspension à la caisse du véhicule, comprenant pour chaque roue un ressort supportant la charge du véhicule, et un amortisseur disposé en parallèle de ce ressort, qui freine les oscillations.

Un type d'amortisseur hydraulique connu comporte une tige disposée suivant l'axe d'un corps tubulaire, comprenant à une extrémité un piston coulissant dans ce corps afin de séparer deux chambres se trouvant de chaque côté. Le piston présente des passages de fluide d'une chambre à l'autre dans chacun des sens, effectuant un freinage de ce fluide pour réaliser l'amortissement de la suspension.

On assure ainsi en freinant les oscillations de la caisse du véhicule, à la fois le confort et la tenue de route de ce véhicule.

Sur certains véhicules, l'amortisseur est disposé sensiblement verticalement, sa partie inférieure étant insérée dans un puits formé dans un élément de la suspension, pour être fixé par un axe horizontal se trouvant en bas de ce puits.

Toutefois pour assurer un certain débattement angulaire de l'amortisseur autour de l'axe horizontal de sa fixation inférieure, le puits peut comporter une forme conique dans le plan du débattement.

On a alors lors du roulage du véhicule un risque de projection de cailloux, et d'entrée de ces cailloux dans la forme conique supérieure du puits. Un caillou peut ensuite se trouver coincé dans le puits resserré à la base, et entraîner un mauvais fonctionnement de l'amortisseur, et son endommagement.

Par ailleurs un type de protection connu, présenté notamment par le document CN-U-201843929, comporte un soufflet réalisé en élastomère, prévu pour couvrir la tige de l'amortisseur quand elle sort du corps, comprenant deux extrémités prévues pour enserrer ce corps ainsi que la tige, reliées entre elles par le soufflet. Le soufflet comporte deux perçages permettant d'équilibrer la pression intérieure quel que soit le débattement de l'amortisseur.

Le document DE 100 41 927 A1 est considéré comme étant l'état de la technique le plus proche de l'objet de l'invention et divulgue les caractéristiques du préambule de la revendication indépendante.

Un problème qui se pose alors avec ce type de protection, est d'assurer une ventilation suffisante de l'amortisseur qui transforme le travail mécanique de freinage de la suspension en énergie calorifique par le laminage du fluide intérieur, afin d'éviter une perte des caractéristiques de cet amortisseur, ainsi que sa détérioration.

On notera que les perçages réalisés sur les plis du soufflet comportent une section de passage d'air variable en fonction de l'étirement de ce soufflet, ce qui permet un équilibre des pressions, mais limite fortement un débit d'air de ventilation par ces perçages.

De plus une succession de perçages sur l'élastomère du soufflet comprenant une matière qui travail en déformation, peuvent le fragiliser, et entraîner des coupures au cours du vieillissement.

La présente invention a notamment pour but d'éviter ces inconvénients de la technique antérieure.

Elle propose à cet effet un système de protection pour un amortisseur hydraulique comprenant une première extrémité fixée à la caisse du véhicule, et une deuxième extrémité fixée à un élément de la suspension, caractérisé en ce qu'il comporte un soufflet recouvrant sensiblement l'amortisseur, dont la base est fixée en haut d'une embase qui forme un élément intermédiaire fixé à l'élément de suspension, cette embase comportant des perçages de ventilation du volume intérieur du système de protection.

Un avantage de ce système de protection est qu'on peut réaliser de manière simple et économique des perçages dans l'embase, par exemple par un moulage d'une matière plastique, qui présentent une forme et une disposition optimisées pour assurer une ventilation efficace de l'amortisseur.

On évite ainsi de réaliser des perçages dans le soufflet en élastomère, qui pourraient présenter une forme variable par la compression de ce soufflet, entraînant une perte de la ventilation. De plus une succession de perçages réalisés dans la matière élastomère du soufflet, pourrait fragiliser cette pièce en facilitant sa découpe lors de son vieillissement.

Le système de protection selon l'invention peut de plus comporter une ou plusieurs des caractéristiques suivantes, qui peuvent être combinées entre elles.

Avantageusement, l'embase comporte des perçages de ventilation prévus pour être tournés vers l'avant et vers l'arrière du véhicule.

En particulier, les perçages de ventilation peuvent être disposés sur le pourtour de l'embase.

Les perçages de ventilation peuvent être disposés notamment suivant plusieurs rangées horizontales de perçages oblongs orientés horizontalement.

Selon un mode de réalisation, les perçages de ventilation comportent une largeur inférieure à environ 5mm.

En particulier, l'embase peut être prévue pour être ajustée dans un puits formé dans l'élément de suspension, recevant la partie inférieure de l'amortisseur.

Dans ce cas, avantageusement les perçages de ventilation sont formés dans une partie supérieure de l'embase prévue pour dépasser au-dessus du puits.

Avantageusement, l'embase comporte des moyens de clipsage prévus pour la maintenir dans le puits.

Avantageusement, l'embase comporte une partie élastique maintenant une pression constante sur le clipsage pour un certain intervalle de tolérance des dimensions du puits.

L'invention a aussi pour objet un véhicule automobile comprenant des amortisseurs hydrauliques disposés sensiblement verticalement, présentant une partie inférieure qui est insérée dans un puits formé dans un élément de la suspension, ces amortisseurs comportant un système de protection comprenant l'une quelconque des caractéristiques précédentes.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1 est une vue en coupe transversale par rapport à l'axe longitudinal du véhicule, d'un amortisseur dans une position comprimée, fixé sur un bras de suspension arrière de ce véhicule ;
- la figure 2 est une vue en coupe longitudinale de cet amortisseur dans une position étirée ;
- la figure 3 est une vue d'un système complet de protection selon l'invention, prévu pour cet amortisseur ;
- la figure 4 est une vue de détail de l'embase seule de ce système de protection, fixée dans le puits du bras de suspension ; et
- la figure 5 est une vue de l'embase seule insérée dans le puits du bras de suspension.

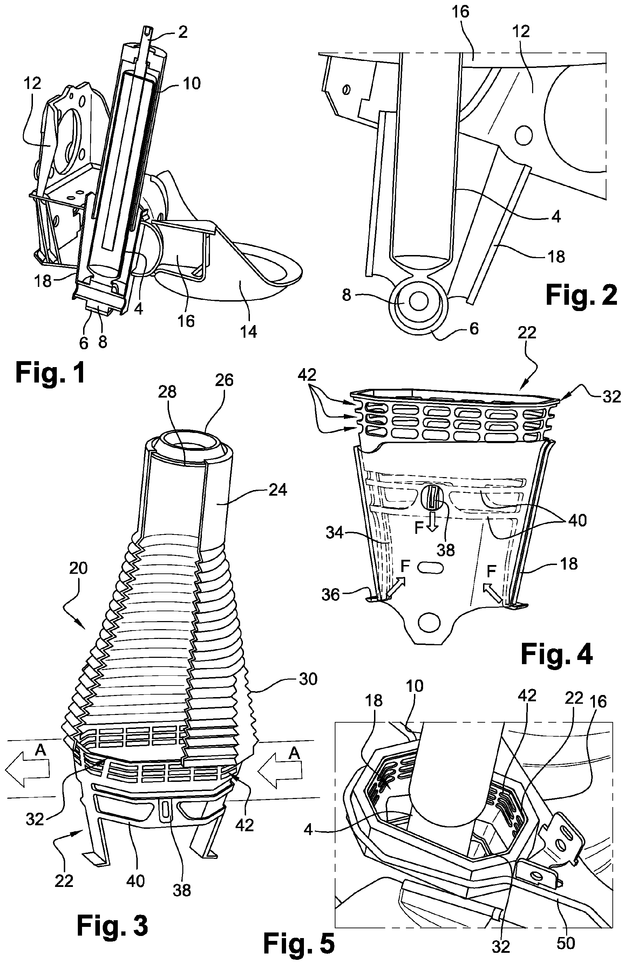

Les figures 1 et 2 présentent un amortisseur comportant une tige 2 disposant à son extrémité inférieure d'un piston non représenté, coulissant dans un tube fermé contenant le fluide 4.

L'extrémité supérieure de la tige 2 est fixée à la caisse du véhicule, l'extrémité inférieure du tube fermé 4 comporte un anneau disposé suivant un axe transversal 6, contenant à l'intérieur par un élastomère de filtration, un tube horizontal de fixation 8 recevant une vis traversant un puits 18.

Le tube fermé 4 est entouré par un tube de protection extérieur 10 dont la partie supérieure est fixée en haut de la tige 2, afin de former une protection de la partie de cette tige sortant au-dessus du tube fermé quand l'amortisseur est en extension.

La suspension arrière du véhicule comporte un bras de suspension 16 présentant dans sa partie arrière un flasque latéral 12 tourné vers l'extérieur du véhicule, recevant le porte moyeu de la roue arrière, et une coupelle horizontale 14 recevant l'appui de la base du ressort de suspension.

En avant de ces éléments, le bras de suspension 16 comporte le puits 18 sensiblement vertical entouré par une tôle, comprenant dans la direction transversale deux faces sensiblement parallèles comportant à leurs bases le perçage recevant la vis du tube de fixation inférieur 8.

Dans la direction longitudinale, le puits 18 comporte deux faces formant un cône ouvert vers le haut, de manière à permettre un débattement de l'amortisseur autour de l'axe de son tube de fixation inférieur 8 quand la suspension arrière travaille.

On a alors lors du roulage du véhicule un risque de projection de cailloux par les roues qui peuvent rentrer dans le puits 18, et se trouver coincés à la base de ce puits qui est resserrée, en faisant du bruit et en endommageant des éléments. Ce problème peut conduire au blocage de l'amortisseur, et du débattement de la roue.

En particulier dans cet exemple, les cailloux comportant des dimensions inférieures à 5mm peuvent traverser le puits 18 en se glissant vers le bas entre l'anneau transversal 6 et la tôle de ce puits, pour tomber par terre, alors que les cailloux de dimension supérieure ne pouvant passer par cette sortie, restent retenus s'ils ne sont pas cassés en morceaux par les mouvements de l'amortisseur.

Les figures 3 et 4 présentent le système de protection pour un amortisseur ne comprenant pas de tube extérieur 10, comportant en partie supérieure un soufflet 20 réalisé par un soufflage de matière plastique ou un moulage d'élastomère, dont le sommet est fixé en haut de l'amortisseur, et la base est fixée au-dessus d'une embase 22 réalisée par un moulage de matière plastique, qui descend dans le puits 18 du bras de suspension 16 pour y être attachée.

Le soufflet 20 présente une partie supérieure cylindrique 24 ajustée autour de la tige seule, le tube de protection de l'amortisseur étant remplacé par le dispositif de protection. Le soufflet 20 se termine en haut par un creux circulaire intérieur qui est ajusté sur un bourrelet circulaire correspondant 28 d'un anneau de filtrage caoutchouc supérieur 26 lié à la tige de l'amortisseur, pour assurer par un serrage la fixation ainsi que l'étanchéité de l'ensemble.

La partie supérieure cylindrique 24 du soufflet 20 se prolonge vers le bas par une forme conique 30 de section ovale allongée suivant l'axe longitudinal du véhicule, se terminant à la base par une rainure annulaire intérieure, qui reçoit un rebord continu tourné vers l'extérieur 32 disposé en haut de l'embase 22, pour assurer de la même manière par un serrage la fixation.

L'embase 22 comporte une forme conique annulaire ouverte vers le haut, s'ajustant à l'intérieur de la tôle du puits 18.

Dans la direction longitudinale, l'embase 22 comporte deux bras inférieurs tournés vers le bas 34, qui se terminent chacun par un crochet tourné vers l'extérieur 36, afin d'assurer par clipsage un accrochage en dessous de la tôle du puits 18 quand cette embase est complètement descendue en s'ajustant dans le contour intérieur de ce puits.

L'embase 22 comporte en bas de sa forme annulaire, de chaque côté entre les deux bras inférieurs 34, en partie haute de ces bras, deux branches flexibles horizontales superposées 40 qui relient ces deux bras entre eux.

De chaque côté les deux branches 40 comportent une butée d'arrêt 38 les reliant entre elles, dépassant vers l'extérieur, qui vient s'ajuster dans un perçage oblong à l'intérieur du puits 18 quand l'embase 22 est fixée sur le bras de suspension 16. La base de cette butée 38 vient en appui en bas de ce perçage.

Lors de la mise en place manuelle de l'embase 22 du système de protection dans le puits 18 du bras de suspension 16, l'opérateur descend cette embase avec une petite déformation élastique des branches 40 vers l'intérieur, jusqu'à ce que les butées d'arrêts 38 rentrent dans leurs perçages en se clipsant dedans. Ensuite avec l'appui de la base des butées 38 dans les perçages, on a une déformation élastique des branches 40 vers le haut jusqu'à ce que les crochets 36 des bras inférieurs 34 se clipsent en dessous du puits 18.

On obtient alors de manière simple et rapide un blocage de l'embase 22 par les crochets 36 ainsi que par les butées d'arrêt 38, avec un serrage indiqué par les flèches F qui est maintenu par la déformation élastique des branches horizontales 40, ce qui bloque cette embase en empêchant des petits mouvements qui pourraient causer des bruits et de l'usure.

On notera que la déformation élastique des branches 40 permet aussi de s'adapter aux écarts de tolérance sur la hauteur de la tôle du puits 18, ainsi qu'à la présence de bavures sur les découpes de cette tôle, ce qui assure de manière simple un blocage de l'embase 22 sans jeux pour une production en grande série.

La partie supérieure de l'embase 22 comporte trois rangées horizontales de perçages oblongs 42 orientés horizontalement, qui sont disposées entre la base du soufflet en élastomère 30, et le dessus de la tôle du puits 18.

Les perçages oblongs 42 comportent une hauteur inférieure à 5mm, et une largeur plus importante, de manière à permettre une ventilation du volume intérieur du soufflet 20 tout en interdisant l'entrée de cailloux dont la dimension est supérieure à ces 5mm.

On notera que les mouvements de la suspension provoquent un échauffement de l'amortisseur, par le travail de laminage du fluide qu'il contient. Ces mouvements de suspension entraînent en même temps un déploiement et une compression du soufflet 20, qui ventile son volume intérieur, en particulier par les perçages oblongs 42, ce qui permet de refroidir l'amortisseur.

De plus les rangées horizontales de perçages oblongs 42 faisant le tour de l'embase 22, et présentant en particulier des ouvertures tournées vers l'avant et vers l'arrière du véhicule, permettent lors du roulage une entrée d'air par le côté avant qui ressort par le côté arrière de ces perçages, indiquée par les flèches A, ce qui ajoute une ventilation du volume intérieur.

On obtient ainsi malgré le recouvrement de l'amortisseur par le soufflet 20, un bon passage d'air évitant un échauffement anormal de cet amortisseur qui pourrait modifier ses caractéristiques, ou l'endommager. Des mesures physiques sur des véhicules ont montré que cet échauffement dans des conditions de travail intenses où la température de l'amortisseur peut atteindre 120°, était très faible, de l'ordre de quelques degrés. D'autres mesures sans ces aérations montrent un échauffement rédhibitoire au bon fonctionnement hydraulique de l'amortisseur.

Pour la mise en place des systèmes de protection, après avoir préparé le train arrière du véhicule comme il est fait habituellement, en ayant fixé dessus les amortisseurs par leurs bases, l'opérateur descend l'embase 22 du système de protection qui arrive complet, autour de cet amortisseur, pour la clipser dans le puits 18 grâce aux butées 38 et aux crochets 36.

L'opérateur comprime ensuite le soufflet 20 au-dessus de l'amortisseur, puis accroche son extrémité supérieure sur l'anneau supérieur 26 de cet amortisseur.

La caisse du véhicule peut ensuite descendre sur le train arrière ainsi préparé, de manière habituelle, sans rien changer à ce procédé d'assemblage de la caisse sur son train.

Après le recouvrement du train avec le véhicule l'opérateur libère la montée de l'amortisseur, en coupant suivant le cas une sangle le maintenant comprimé, qui glisse ensuite entre la partie supérieure du soufflet 20 et l'anneau de filtrage 26. L'opérateur peut récupérer enfin cette sangle par le bas du puits 18, par le passage inférieur sur le côté de l'anneau 6.

Pour le démontage du système de protection, après avoir détaché l'amortisseur et déposé le soufflet 20, l'opérateur presse sur l'embase 22 dans la direction des deux crochets 36 afin de les rapprocher l'un de l'autre pour qu'ils se dégagent du puits 18, et ensuite retire cette embase vers le haut en déformant légèrement cette embase vers l'intérieur afin de dégager les deux butées 38 de leurs trous oblongs.

La figure 5 présente l'embase seule 22 fixée dans le puits 18 du bras de suspension 16, sa partie supérieure comportant les perçages oblongs 42 dépassant au-dessus de ce bras. Le rebord continu extérieur 32 intégrant la base du soufflet 20, est nettement au-dessus du bras de suspension 16, suivant une hauteur d'environ 15mm permettant un bon passage aéraulique par les perçages 42.

Une canalisation de frein 50 est fixée sur la face supérieure du bras de suspension 16 pour alimenter le frein de la roue portée par ce bras, en passant à proximité du puits 18.

On notera que l'embase 22 dépassant au-dessus de cette face supérieure du bras de suspension 16, permet de réaliser un accrochage de la base du soufflet 20 déportée qui reste au-dessus de la canalisation de frein 50, ce qui évite de déplacer la canalisation qui ne gêne pas pour effectuer cette mise en place du soufflet.

On assure en particulier par un serrage sans jeu du système de protection sur les organes du véhicule le recevant, une absence de frottement de ce système qui évite des bruits, ainsi que des usures qui pourraient entraîner un vieillissement prématuré de certains éléments. L'absence notamment de frottement, évite une détérioration des revêtements des pièces les recevant.

D'une manière générale, le système de protection selon l'invention se pose sur les véhicules en cours de montage sans outillage particulier, ni élément de fixation additionnel comme des vis ou des agrafes.

De plus ce système de protection ne nécessitant aucune modification du véhicule, peut s'adapter sur les nouvelles productions sans modification des études de ce véhicule. Il peut s'adapter sur les productions anciennes par des interventions du service après-vente sans modification ni échange de pièce, avec seulement un démontage de la fixation supérieure de l'amortisseur.

## Revendications

1. Système de protection pour un amortisseur hydraulique comprenant une première extrémité fixée à la caisse du véhicule, et une deuxième extrémité (6) fixée à un élément de la suspension (16), ledit système de protection comportant un soufflet (20) recouvrant sensiblement l'amortisseur, dont la base est fixée en haut d'une embase (22) qui forme un élément intermédiaire fixé à l'élément de suspension (16), cette embase comportant des perçages de ventilation (42) du volume intérieur du système de protection, **caractérisé en ce que** l'embase (22) comporte des perçages de ventilation (42) prévus pour être tournés vers l'avant et vers l'arrière du véhicule.

2. Système de protection selon la revendication 1, **caractérisé en ce que** les perçages de ventilation (42) sont disposés sur le pourtour de l'embase.

3. Système de protection selon la revendication 2, **caractérisé en ce que** les perçages de ventilation (42) sont disposés suivant plusieurs rangées horizontales de perçages oblongs orientés horizontalement.

4. Système de protection selon l'une quelconque des revendications précédentes, **caractérisé en ce que** les perçages de ventilation (42) comportent une largeur inférieure à environ 5mm.

5. Système de protection selon l'une quelconque des revendications précédentes, **caractérisé en ce que** l'embase (20) est prévue pour être ajustée dans un puits (18) formé dans l'élément de suspension (16), recevant la partie inférieure de l'amortisseur.

6. Système de protection selon la revendication 5, **caractérisé en ce que** les perçages de ventilation (42) sont formés dans une partie supérieure de l'embase (22) prévue pour dépasser au-dessus du puits (18).

7. Système de protection selon la revendication 5 ou 6, **caractérisé en ce que** l'embase comporte des moyens de clipsage (36) prévus pour la maintenir dans le puits (18).

8. Système de protection selon la revendication 7, **caractérisé en ce que** l'embase (22) comporte une partie élastique (40) maintenant une pression constante sur le clipsage (36) pour un certain intervalle de tolérance des dimensions du puits (18).

9. Véhicule automobile comprenant des amortisseurs hydrauliques disposés sensiblement verticalement, présentant une partie inférieure qui est insérée dans un puits (18) formé dans un élément de la suspension (16), **caractérisé en ce que** ces amortisseurs comportent un système de protection réalisé selon l'une quelconque des revendications précédentes.

## Patentansprüche

1. Schutzsystem für einen hydraulischen Stoßdämpfer, der ein erstes Ende umfasst, das an der Karosserie des Fahrzeugs befestigt ist, und ein zweites Ende (6), das an einem Element der Aufhängung (16) befestigt ist, wobei das Schutzsystem einen Balg (20) umfasst, der den Stoßdämpfer im Wesentlichen bedeckt, dessen Basis auf der Oberseite eines Sockels (22) befestigt ist, der ein Zwischenelement bildet, das an dem Aufhängungselement (16) befestigt ist, wobei dieser Sockel Bohrungen (42) zum Belüften des Innenraums des Schutzsystems umfasst, **dadurch gekennzeichnet, dass** der Sockel (22) Belüftungsbohrungen (42) umfasst, die vorgesehen sind, um zu der Vorderseite und zu der Rückseite des Fahrzeugs gerichtet zu sein.

2. Schutzsystem nach Anspruch 1, **dadurch gekennzeichnet, dass** die Belüftungsbohrungen (42) auf dem Umkreis des Sockels angeordnet sind.

3. Schutzsystem nach Anspruch 2, **dadurch gekennzeichnet, dass** die Belüftungsbohrungen (42) entlang mehrerer horizontaler Reihen länglicher Bohrungen, die horizontal ausgerichtet sind, angeordnet sind.

4. Schutzsystem nach einem der vorhergehenden Ansprüche, **dadurch gekennzeichnet, dass** die Belüftungsbohrungen (42) eine Breite kleiner als etwa 5 mm umfassen.

5. Schutzsystem nach einem der vorhergehenden Ansprüche, **dadurch gekennzeichnet, dass** der Sockel (20) vorgesehen ist, um in einem Schacht (18), der in dem Aufhängungselement (16) gebildet ist, der den unteren Teil des Stoßdämpfers aufnimmt, angepasst zu sein.

6. Schutzsystem nach Anspruch 5, **dadurch gekennzeichnet, dass** die Belüftungsbohrungen (42) in einem oberen Teil des Sockels (22), der dazu vorgesehen ist, oberhalb des Schachts (18) vorzuragen, gebildet sind.

7. Schutzsystem nach Anspruch 5 oder 6, **dadurch gekennzeichnet, dass** der Sockel Mittel zum Clipsen (36) umfasst, die vorgesehen sind, um ihn in dem Schacht (18) zu halten.

8. Schutzsystem nach Anspruch 7, **dadurch gekennzeichnet, dass** der Sockel (22) ein elastisches Teil (40) umfasst, das einen konstanten Druck auf die Clipsung (36) für ein bestimmtes Toleranzintervall der Maße des Schachts (18) ausübt.

9. Kraftfahrzeug, das hydraulische Stoßdämpfer umfasst, die im Wesentlichen vertikal angeordnet sind, die einen unteren Teil aufweisen, der in einen Schacht (18) eingesetzt ist, der in einem Element der Aufhängung (16) gebildet ist, **dadurch gekennzeichnet, dass** diese Stoßdämpfer ein Schutzsystem umfassen, das nach einem der vorhergehenden Ansprüche hergestellt ist.

## Claims

1. A protection system for a hydraulic shock absorber including a first end fixed to the vehicle body, and a second end (6) fixed to an element of the suspension (16), said protection system comprising a gaiter (20) substantially covering the shock absorber, the bottom of which is fixed at the top of a base part (22) which forms an intermediate element fixed to the suspension element (16), this base part comprising ventilation drillings (42) for ventilating the interior volume of the protection system, **characterized in that** the base part (22) comprises ventilation drillings (42) provided to be turned towards the front and towards the rear of the vehicle.

2. The protection system according to Claim 1, **characterized in that** the ventilation drillings (42) are disposed over the periphery of the base part.

3. The protection system according to Claim 2, **characterized in that** the ventilation drillings (42) are disposed along several horizontal rows of horizontally oriented oblong drillings.

4. The protection system according to any one of the preceding claims, **characterized in that** the ventilation drillings (42) comprise a width less than approximately 5 mm.

5. The protection system according to any one of the preceding claims, **characterized in that** the base part (20) is provided so as to be adjusted in a well (18) formed in the suspension element (16), receiving the lower part of the shock absorber.

6. The protection system according to Claim 5, **characterized in that** the ventilation drillings (42) are formed in an upper portion of the base part (22) provided so as to pass above the well (18).

7. The protection system according to Claim 5 or 6, **characterized in that** the base part comprises clipping means (36) provided so as to retain it in the well (18).

8. The protection system according to Claim 7, **characterized in that** the base part (22) comprises an elastic portion (40) maintaining a constant pressure on the clipping (36) for a certain tolerance interval of the dimensions of the well (18).

9. A motor vehicle including hydraulic shock absorbers disposed substantially vertically, having a lower portion which is inserted in a well (18) formed in an element of the suspension (16), **characterized in that** these shock absorbers comprise a protection system realized according to any one of the preceding claims.
